# EUROPÄISCHE PATENTSCHRIFT

(11) **EP 0 986 321 B1**
(45) Veröffentlichungstag und Bekanntmachung des Hinweises auf die Patenterteilung: **21.11.2001**
(21) Anmeldenummer: 98930771.5
(22) Anmeldetag: 30.05.1998
(51) Int. Cl.: A47J 37/12, G07F 13/10

(54) **VORRICHTUNG ZUR AUFBEREITUNG VON LEBENSMITTELN**
DEVICE FOR PREPARING FOODSTUFFS
DISPOSITIF DE PREPARATION DE PRODUITS ALIMENTAIRES

(30) Priorität: 06.06.1997 DE 19723754
(43) Veröffentlichungstag der Anmeldung: 22.03.2000
(73) Patentinhaber: Schleh, Rudolph, 69234 Dielheim (DE)
(72) Erfinder: Schleh, Rudolph, 69234 Dielheim (DE)
(74) Vertreter: Sartorius, Peter, Dipl.-Ing.
(86) Internationale Anmeldenummer: EP9803247
(87) Internationale Veröffentlichungsnummer: WO9855011

(56) Entgegenhaltungen:
- EP-A- 0 462 354
- EP-A- 0 608 463
- EP-A- 0 636 334
- EP-A- 0 755 031
- WO-A-93/21809
- FR-A- 2 597 319
- US-A- 3 448 677
- US-A- 4 572 404
- US-A- 5 404 797

## Beschreibung

Die Erfindung bezieht sich auf eine Vorrichtung zur Aufbereitung von Lebensmitteln.

Es ist bereits eine Vorrichtung aus der FR 2 597 319 A1 bekannt, die eine Zubereitung bzw. ein Fritieren von Pommes frites zuläßt, wobei die tiefgekühlten Pommes frites aus einem Sammelbehälter entnommen und über eine Dosiereinrichtung bzw. Waage dem Zubereitungsbehälter zugeführt werden. Im Zubereitungsbehälter werden die Pommes frites in herkömmlicher Weise in Fett gegart und nach entsprechender Zubereitungszeit dem Zubereitungsbehälter entnommen. Hierbei ist der Sammelbehälter über eine Auslaßöffnung mit einer Öffnung eines Zubereitungsbehälters verbunden, die über eine dritte Verschlußeinrichtung verschließbar ist. Die Auslaßöffnung des Sammelbehälters ist über eine erste Verschlußeinrichtung verschließbar, die in Abhängigkeit einer Stellgröße oder einer Lebensmittelmenge in eine Öffnungs- und/oder Schließstellung bringbar ist. Der Zubereitungsbehälter steht über mindestens eine Öffnung mit einem Auffangbehälter in Verbindung.

Demgemäß besteht die Erfindungsaufgabe darin, eine Vorrichtung zur Aufbereitung von Lebensmitteln zu schaffen, mittels derer Nahrungsmittel, insbesondere Tiefkühlkost wie Pommes frites, schneller und schonender aufbereitet bzw. in einen eßbaren Zustand versetzt und dann einer Bedienungsperson zur Verfügung gestellt werden können.

### Gelöst wird die Aufgabe durch folgende Merkmale:

Die Vorrichtung weist einen Sammelbehälter zur Aufnahme von Lebensmitteln auf. Der Sammelbehälter ist über eine Auslaßöffnung mit einer Öffnung eines Zubereitungsbehälters verbunden, die während der Zubereitung der Lebensmittel über eine dritte Verschlußeinrichtung verschließbar ist. Die Auslaßöffnung des Sammelbehälters ist über eine erste Verschlußeinrichtung verschließbar, die über ein Stellglied in Abhängigkeit einer Stellgröße oder einer Lebensmittelmenge in eine Öffnungsund/oder Schließstellung bringbar ist. Der Zubereitungsbehälter ist mit einer Druckerhöhungseinrichtung sowie einer Zuführeinrichtung für Wasser oder für eine andere Substanz oder Flüssigkeit verbunden und steht erst nach Zubereitung der Lebensmittel über mindestens eine Öffnung mit einem Auffangbehälter in Verbindung, der von einer Bedienungsperson entnehmbar ist.

Durch die vorteilhafte Ausbildung der Vorrichtung zur Aufbereitung von Lebensmitteln können beispielsweise tiefgekühlte Pommes frites in einem Kühlbehälter bis zur Entnahme gelagert werden und dann mittels dieser Vorrichtung so aufbereitet werden, daß die Bedienungsperson die Pommes frites zum Verzehr entnehmen kann. Hierzu werden die Pommes frites in einem gekühlten Behälter gelagert und dann mittels Knopfdruck über eine Zuführvorrichtung und eine Dosiervorrichtung automatisch einem Zubereitungsbehälter zugeführt. Durch die vorteilhafte Ausbildung der Dosiervorrichtung ist es möglich, die Pommes frites oder auch andere Nahrungsmittel dem Zubereitungsbehälter zuzuführen. In dem Zubereitungsbehälter werden die Nahrungsmittel gegart, beispielsweise die Pommes frites, die vorfritiert sein können, nochmals so behandelt, daß sie für den Verzehr geeignet sind. Nach Aufbereitung der Nahrungsmittel werden diese automatisch einem Behälter zugeführt, so daß sie der Bedienungsperson nun zum Verzehr zur Verfügung stehen. Es können also mit dieser Vorrichtung zur Aufbereitung der Lebensmittel bereits vorbehandelte Lebensmittel wie Pommes frites in dem Behälter so lange gelagert werden, bis sie von einer Bedienungsperson dem Behälter entnommen werden sollen. Da die Vorrichtung voll automatisiert ist, braucht die Bedienungsperson, die die Lebensmittel der Vorrichtung entnehmen will, lediglich einen einzigen Schaltknopf zu betätigen, über den der gesamte Arbeitsprozeß zur Aufbereitung der Lebensmittel gesteuert wird. Hierzu ist es vorteilhaft, daß der Sammelbehälter in einem isolierten Gehäuse aufgenommen ist, der mittels eines Kühlaggregats auf der gewünschten Tiefkühltemperatur gehalten wird. Dieser Sammelbehälter dient in vorteilhafter Weise zur Aufnahme der Nahrungsmittel, beispielsweise der Pommes frites. Will also nun die Bedienungsperson die Pommes frites der Vorrichtung entnehmen, betätigt sie hierzu einen Schaltknopf, der den Arbeitsprozeß der Vorrichtung steuert. Nach Betätigung des Schaltknopfs wird zuerst die Öffnung im Vorratsbehälter freigegeben, und die Pommes frites können über diese Öffnung einer Fördervorrichtung zugeführt werden, die die Pommes frites dann einer Dosiervorrichtung, beispielsweise einer Waage, zuleitet. Ist eine bestimmte Menge in einem Zwischenbehälter aufgenommen, so öffnet eine zur Dosiervorrichtung gehörende Klappe eine weitere Öffnung und führt die Nahrungsmittel über eine Auslaßöffnung des Kühlbehälters einem Zubereitungsbehälter zu, der in vorteilhafter Weise mit einer Heizeinrichtung ausgestattet sein kann. Die Öffnung des Kühlbehälters, die mittels eines Schiebers oder einer Klappe verschlossen ist, öffnet erst dann, wenn die Verschlußeinrichtung im Zubereitungsbehälter geöffnet ist. Danach öffnet sich auch die Klappe im Kühlbehälter, und die Nahrungsmittel bzw. die Pommes frites werden nun dem Zubereitungsbehälter zugeführt und mittels einer Heizvorrichtung aufbereitet, entweder gegart, gebacken oder gebraten bzw. in einen eßbaren Zustand gebracht. Nach diesem Arbeitsprozeß kann sich der Zubereitungsbehälter beispielsweise um 180° drehen, bis die Öffnung über einem Auffangbehälter steht und die Nahrungsmittel in diesen Auffangbehälter abgegeben werden können. Hierzu wird der Auffangbehälter in bestimmten Taktzeiten unter die Öffnung des Zubereitungsbehälters geführt. Nach diesem Arbeitsprozeß kann die Bedienungsperson den Auffangbehälter entnehmen und die Nahrungsmittel verzehren. Mittels dieser Vorrichtung können also auf einfache und sehr schnelle Weise, beispielsweise zwischen 30 und 60 sec, Nahrungsmittel aufbereitet und dann dem Verzehr zugeführt werden. Eine derartige Vorrichtung eignet sich insbesondere für Pommes frites, die bereits vorfritiert sind und im Zubereitungsbehälter lediglich nochmals behandelt werden. Je nach Steuerung der Arbeitsabläufe können aber auch andere Nahrungsmittel ohne weiteres mit einer derartigen Vorrichtung gekocht, gegart oder in einen eßbaren Zustand gebracht werden. Hierzu wird ein entsprechendes Softwareprogramm je nach Art der Nahrungsmittel eingesetzt, das den Arbeitsablauf der Vorrichtung zur Aufbereitung der Nahrungsmittel steuert.

Ferner ist es vorteilhaft, daß die vor der Öffnung des Zubereitungsbehälters vorgesehene erste Verschlußeinrichtung als Dosiereinrichtung ausgebildet ist und zur Portionierung der Lebensmittel dient, die dem Zubereitungsbehälter zugeführt werden. Da dem Zubereitungsbehälter eine Dosiereinrichtung zugeordnet ist, lassen sich die Nahrungsmittel auf einfache Weise portionieren und dann dem Zubereitungsbehälter zuführen.

Hierzu ist es vorteilhaft, daß die vor der Öffnung des Zubereitungsbehälters vorgesehene erste Verschlußeinrichtung als Waage ausgebildet ist, die aus einer auf einer Achse verschwenkbar angeordneten Klappe und einem mit der Klappe verbundenen Hebelarm besteht, der mit einer Antriebsvorrichtung verbunden ist. Auf einfache Weise kann die Dosiervorrichtung als Waage, insbesondere als Klappe, ausgebildet sein, auf der eine bestimmte Menge der Pommes frites gehalten wird, bis eine bestimmte Füllmenge erreicht ist. Ist diese Füllmenge erreicht, so wird die als Klappe ausgebildete Waage geschwenkt und dann der Auslaßöffnung zugeführt. Der Auffangbehälter und die Waage befinden sich hierzu in vorteilhafter Weise in einem Isoliergehäuse, das mit einem Kühlaggregat versehen ist.

In vorteilhafter Weise weist die Antriebsvorrichtung eine Exzenterscheibe auf, die über ein Verbindungsteil mit dem Hebelarm wirkungsmäßig verbunden ist.

Gemäß einer bevorzugten Ausführungsform der erfindungsgemäßen Lösung ist schließlich vorgesehen, daß der ersten Verschlußeinrichtung das Stellglied zugeordnet ist, das bei einer bestimmten Füllmenge der Lebensmittel und einer sich daraus ergebenden Stellgröße ein Verstellen der Klappe in eine Öffnungsstellung und nach Abgabe der Lebensmittel ein Verstellen in eine Schließstellung bewirkt, und daß die Verschlußeinrichtung einen Hebelarm aufweist, wobei auf dem Hebelarm der Klappe ein der Füllmenge entsprechendes Gewicht angeordnet ist.

Im Zusammenhang mit der erfindungsgemäßen Ausbildung und Anordnung ist es von Vorteil, daß der Hebelarm über ein elastisch ausgebildetes Stellelement mit einem Zweistellungsschalter verbunden ist, der nur dann aktivierbar ist, wenn die Klappe ihre Endlage- oder Schließstellung erreicht hat. Hierdurch wird sichergestellt, daß die Klappe nur dann wieder in eine Schließstellung gebracht werden kann, wenn die Füllmenge, beispielsweise die Pommes frites, vollständig von der Klappe entfernt worden ist. Fallen beispielsweise die Pommes frites zwischen die äußere Kante der Klappe und die gegenüberliegende Wand der Klappe und bewirken ein Klemmen der Klappe bzw. verhindern sie, daß diese in eine vollständige Schließstellung gebracht wird, so kann die Klappe mittels ihrer Verstellvorrichtung nochmals in eine Offenstellung gebracht und somit auch die Restmenge der Lebensmittel von der Klappe entfernt werden.

Hierzu ist es vorteilhaft, daß das zwischen der Antriebsvorrichtung und dem Hebel vorgesehene Verbindungsteil als Federelement ausgebildet ist, das so ausgelegt ist, daß bei einer bestimmten Gewichtsmenge die Klappe in eine Öffnungsstellung verstellbar ist.

Außerdem ist es vorteilhaft, daß der Zubereitungsbehälter eine verstellbare dritte Verschlußeinrichtung aufweist, die über einen Motor in eine Schließ- oder Öffnungsstellung bringbar ist, und daß die dritte Verschlußeinrichtung des Zubereitungsbehälters in Wirkverbindung mit einer zweiten Verschlußeinrichtung steht, über die die Öffnung des Zubereitungsbehälters verschließbar ist.

Ferner ist es vorteilhaft, daß die zweite Verschlußeinrichtung des Sammelbehälters über ein Stellteil mit der Verschlußeinrichtung des Zubereitungsbehälters verbunden ist und daß ein Antriebsmotor über das Stellteil mit der dritten Verschlußeinrichtung und über eine ein Spiel zulassende Verbindung bzw. das Stellglied zwangweise mit der zweiten Verschlußeinrichtung in Verbindung steht. Durch die Zwangverbindung zwischen der Verschlußeinrichtung an der Auslaßöffnung des Auffangbehälters bzw. des Kühlgehäuses und der Öffnung des Zubereitungsbehälters wird sichergestellt, daß die Pommes frites die Auslaßöffnung des Kühlgehäuses erst dann passieren können, wenn sich die Öffnung des Zubereitungsbehälters in einer Offenstellung befindet, d. h. die zugehörige Verschlußvorrichtung so weit verstellt worden ist, daß die Pommes frites die Öffnung des Zubereitungsbehälters passieren können. Hierdurch wird verhindert, daß die Pommes frites zu früh aus dem Auslaßbehälter bzw. aus dem Kühlgehäuse gelangen und auf die geschlossene Klappe des Zubereitungsbehälters fallen.

In weiterer Ausgestaltung der Erfindung ist es vorteilhaft, daß vor der Dosiereinrichtung eine Transportvorrichtung vorgesehen ist, die mit einer Antriebsvorrichtung in Wirkverbindung steht, die die Lebensmittel der Dosiervorrichtung zuführt. Mittels der Transportvorrichtung, die sich vor der Dosiereinrichtung befindet, wird je nach Ausbildung der Transportvorrichtung bereits eine bestimmte Füllmenge der Dosiereinrichtung zugeführt, die erst dann öffnet und die Transportvorrichtung der Zuführeinrichtung abschaltet, wenn sich eine bestimmte Füllmenge auf der Dosiervorrichtung bzw. der Klappe angesammelt hat.

Hierzu ist es vorteilhaft, daß der Sammelbehälter und die Dosiereinrichtung sowie die Transportvorrichtung in einem isolierten Gehäuse bzw. Kühlgehäuse vorgesehen sind. Durch diese Anordnung wird sichergestellt, daß die Nahrungsmittel möglichst lange gekühlt bleiben, und zwar so lange, bis beispielsweise die Pommes frites dem Zubereitungsbehälter zugeführt werden.

In weiterer Ausgestaltung der Erfindung ist es vorteilhaft, daß das Kühlgehäuse über eine isolierte Verschlußeinrichtung oder die zweite Verschlußeinrichtung verschließbar ist. Da auch die Verschlußeinrichtung isoliert ausgebildet ist, wird eine einwandfreie Kühlung der Nahrungsmittel in dem Kühlbehälter bzw. Kühlgehäuse sichergestellt.

Eine zusätzliche Möglichkeit gemäß einer Weiterbildung der erfindungsgemäßen Vorrichtung besteht darin, daß zwischen der Dosiereinrichtung und der isolierten Verschlußeinrichtung oder der zweiten Verschlußeinrichtung ein Aufnahmeraum vorgesehen ist. Durch den zweiten im Kühlraum vorgesehenen Aufnahmeraum können die bereits portionierten Nahrungsmittel so lange zwischengelagert werden, bis die Verschlußeinrichtung in dem nachfolgenden Zubereitungsbehälter in eine Offenstellung gebracht worden ist. Hierzu ist es vorteilhaft, daß die dritte Verschlußeinrichtung des Zubereitungsbehälters zuerst geöffnet wird und dann mit zeitlicher Verzögerung über die Zwangführung die zweite Verschlußeinrichtung des Kühlgehäuses und/oder des Aufnahmeraums geöffnet wird.

Eine wesentliche vorteilhafte Ausführungsform erreicht man dadurch, daß der Zubereitungsbehälter über eine Antriebsvorrichtung antreibbar ist. Dadurch können die Nahrungsmittel einwandfrei aufbereitet werden, und es wird verhindert, daß sie beim Aufbereitungsvorgang beispielsweise verklumpen und dadurch nicht die gewünschte Qualität aufweisen.

Eine einwandfreie Aufbereitung der Nahrungsmittel erhält man dadurch, daß der Zubereitungsbehälter über die Heizung in Abhängigkeit des aufgenommenen Guts bzw. der Pommes frites beheizbar ist und mit einer Druckerhöhungseinrichtung und/oder der Zuführeinrichtung für Wasser oder für eine andere Substanz oder Flüssigkeit verbunden ist. Mittels der Druckerhöhungseinrichtung wird eine Verbesserung der Aufbereitung der Nahrungsmittel gewährleistet. Durch die Zuführung von Flüssigkeit wird der Vorgang zur Aufbereitung der Pommes frites wesentlich beschleunigt und verbessert, insbesondere dann, wenn diese tiefgekühlt sind.

Eine zusätzliche Möglichkeit ist gemäß einer Weiterbildung der erfindungsgemäßen Vorrichtung, daß die Antriebsvorrichtung mit einer Steuereinrichtung zur Beeinflussung der Laufzeit und/oder der Antriebsdrehzahl des Zubereitungsbehälters ausgestattet ist und daß nach der Aufbereitung der Lebensmittel mittels des Zubereitungsbehälters die Öffnung automatisch geöffnet und der Auffangbehälter mit den Lebensmitteln geleert wird.

Gemäß einer bevorzugten Ausführungsform der erfindungsgemäßen Lösung ist schließlich vorgesehen, daß die Vorrichtung eine Halterung aufweist, in der mehrere Auffangbehälter bzw. Behälter zur Aufnahme von Lebensmitteln stapelbar sind, daß im Bereich der Halterung oder einer Abgabeöffnung der Halterung mindestens ein Halteelement vorgesehen ist, das den Auffangbehälter in der Halterung festhält, und daß im Bereich der Abgabeöffnung der Halterung ein Trennteil vorgesehen ist, das zumindest einen Auffangbehälter von den übrigen in der Halterung aufgenommenen Auffangbehältern derart trennt, daß der Auffangbehälter in eine Position zur Aufnahme von Gut bzw. Lebensmitteln bringbar ist.

Hierzu ist es vorteilhaft, daß das Halteelement und das Trennteil auf einer Drehachse angeordnet und über eine Antriebsvorrichtung gemeinsam antreibbar sind.

Im Zusammenhang mit der erfindungsgemäßen Ausbildung und Anordnung ist es von Vorteil, daß das Halteelement und das Trennteil aus zwei miteinander verbundenen Rotationskörpern bestehen, die gemeinsam über die Antriebsvorrichtung antreibbar sind, und daß das obere Trennteil der beiden Rotationskörper im wesentlichen kreisförmig ausgebildet ist und ein Teil dieses kreisförmigen Rotationskörpers im Bereich seines Außenumfangs segmentartig abgeschnitten ist.

Hierzu ist es vorteilhaft, daß der Auffangbehälter einen Halterand aufweist, unter den das Halteelement des oberen Rotationskörpers bringbar ist, und daß der Halterand eine Breite R₁ aufweist, die in etwa der Breite A₁ des segmentartigen Abschnitts entspricht.

Vorteilhaft ist es ferner, daß der Auffangbehälter einen Halterand aufweist, unter den das Halteelement des unteren Rotationskörpers bringbar ist, und daß das Halteelement des oberen Rotationskörpers gegenüber dem Halteelement des unteren Rotationskörpers um einen Winkel zwischen 45° und 230° oder um 180° versetzt ist. Durch die Vorrichtung zur Aufnahme der Auffangbehälter wird sichergestellt, daß diese in einer Halterung so lange gehalten werden können, bis ein entsprechender Auffangbehälter unter die Öffnung der Abgabeöffnung des Zubereitungsbehälters geführt werden soll. Die Halterung besteht in vorteilhafter Weise aus einem Halteteil, das unter den Rand eines Auffangbehälters geführt wird und den untersten Auffangbehälter sowie die darüber gestapelten, weiteren Auffangbehälter in der Halterung zurückhält. Soll nun beispielsweise der untere Auffangbehälter von den übrigen getrennt werden, wird das Halteelement um mindestens 180° gedreht, so daß der segmentartige Abschnitt des Halteelements im Bereich des Auffangbehälters gedreht wird, der untere Rand des Auffangbehälters freigegeben wird und dieser Auffangbehälter nach unten fallen kann. Gleichzeitig wird das obere Halteelement wieder in eine entsprechende Position gebracht, so daß der darüberliegende Auffangbehälter automatisch so lange gehalten wird, bis er in eine Aufnahmeposition gebracht werden soll. Dies wird in vorteilhafter Weise dadurch erreicht, daß die beiden Rotationskörper jeweils um 180° versetzt mit einem entsprechenden segmentartigen Abschnitt bzw. Ausschnitt versehen sind, die jeweils nacheinander sicherstellen, daß der unterste Abgabebehälter nach unten abgegeben werden kann.

In weiterer Ausgestaltung der Erfindung ist es vorteilhaft, daß die Vorrichtung im Bereich der Abgabeöffnung der Halterung zur Aufnahme der Auffangbehälter einen Aufnahmetisch, einen Drehteller oder einen Aufnahmetisch mit Förderelementen aufweist, auf die die Auffangbehälter abstellbar sind und nacheinander unter die Öffnung bzw. den Abgabebereich des Zubereitungsbehälters bringbar sind, und daß dem Aufnahmetisch oder dem Drehteller eine weitere Halterung oder ein Gehäuse zur Aufnahme von Auffangbehältern zugeordnet ist, in den Beimischungen oder Gewürze aufgenommen werden können.

Vorteilhaft ist es ferner, daß in der Halterung oder in den Gehäusen zur Aufnahme von Auffangbehältern mindestens ein Trennelement oder ein Rührteil vorgesehen ist, mittels dessen die Auffangbehälter voneinander getrennt werden können.

Damit die einzelnen Auffangbehälter nur schrittweise, d. h. je nach Bedarf, unter die Öffnung des Zubereitungsbehälters geführt werden, ist es vorteilhaft, daß diese mittels eines drehbaren Aufnahmetisches weitergeleitet werden.

Der Aufnahmetisch kann auch feststehend ausgebildet sein, wobei auf dem Aufnahmetisch Förderelemente vorgesehen werden, die den Weitertransport der einzelnen Auffangbehälter zur Öffnung des Zubereitungsbehälters sicherstellen. Hierzu kann der Aufnahmetisch als Drehteller ausgebildet sein oder entsprechende Förderelemente aufweisen, die sich oberhalb des Aufnahmetisches drehen und die einzelnen Auffangbehälter in die gewünschte Aufnahmeposition bringen, so daß sie beispielsweise mit Pommes frites befüllt werden können. Neben dem ersten Auffangbehälter kann eine zweite Halterung vorgesehen werden, in der vorbereitete Behälter vorgesehen sind, die zur Aufnahme von Gewürzen, z. B.

Senf oder Ketchup, dienen. Damit sich die einzelnen Behälter nicht in den Halterungen festklemmen, können diese mit einem oder mehreren Trenn- oder Rührteilen versehen werden, die bewirken, daß die beispielsweise als Kugel ausgebildeten Auffangbehälter ohne weiteres locker in der Halterung aufbewahrt werden, bis sie über eine Abgabeöffnung der Bedienungsperson zugeführt werden.

Hierzu ist es vorteilhaft, daß die in dem Sammelbehälter aufgenommenen Lebensmittel oder die Pommes frites über eine Auslaßöffnung der Dosiervorrichtung zugeführt werden, die eine bestimmte Füllmenge über die Öffnung des Zubereitungsbehälters der Verschlußeinrichtung zuführt, die erst dann in eine Offenstellung verstellbar ist, wenn die Verschlußeinrichtung des Zubereitungsbehälters in eine Offenstellung gebracht ist. Die Lebensmittel oder die Pommes frites werden im Zubereitungsbehälter unter Wasserzufuhr und gleichzeitiger Druckerhöhung in einen eßbaren Zustand gebracht, wobei nach Zubereitung der Lebensmittel diese in einen Auffangbehälter abgegeben werden und der gefüllte Auffangbehälter von dem nachfolgenden Auffangbehälter mittels einer Trennvorrichtung getrennt sowie auf einem Aufnahmetisch abgestellt wird und dann von einer Bedienungsperson entnommen werden kann.

Weitere Vorteile und Einzelheiten der Erfindung sind in den Patentansprüchen und in der Beschreibung erläutert und in den Figuren dargestellt.

Es zeigt:
- Figur 1: eine Gesamtansicht der Vorrichtung zur Aufbereitung von Lebensmitteln, insbesondere Pommes frites, mit einem Kühlbehälter und einer Vorrichtung zur Zubereitung der Pommes frites sowie einer Abgabevorrichtung zur Aufnahme von Auffangbehältern, in denen die Pommes frites aufgenommen werden,
- Figur 2: eine Seitenansicht ähnlich Figur 1, jedoch mit einem Förderband,
- Figur 3 und 4: zwei Ansichten der Dosiereinrichtung bzw. der Waage zur Portionierung der Lebensmittel bzw. der Pommes frites,
- Figur 5 und 6: zwei verschiedene Ansichten der Zubereitungsvorrichtung zur Behandlung der Nahrungsmittel bzw. der Pommes frites mit der zugehörigen Antriebsvorrichtung zur Rotationsbewegung der Zubereitungsvorrichtung bzw. zum Verstellen der Verschlußeinrichtung,
- Figur 7: eine Vorrichtung zur Aufnahme der Auffangbehälter und zur Trennung eines Aufnahmebehälters von den übrigen in einer Halterung aufgenommenen Auffangbehältern, damit ein einzelner Auffangbehälter einer weiteren Transportvorrichtung zugeleitet werden kann,
- Figur 8 und 9: die Vorrichtung zur Trennung eines Auffangbehälters von den übrigen in einer Halterung aufgenommenen. Auffangbehältern,
- Figur 10: einen Aufnahmetisch zur Aufnahme der Aufnahmebehälter,

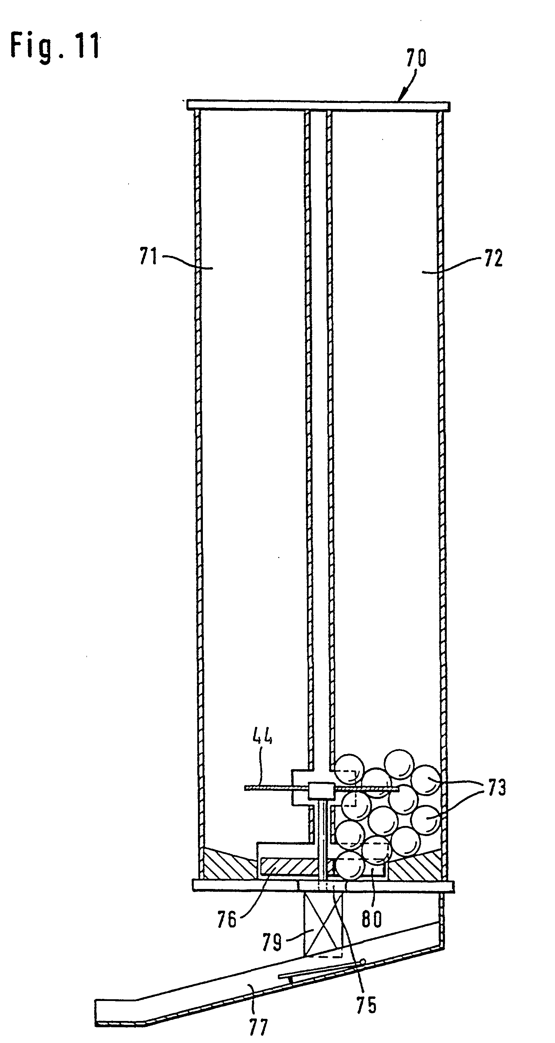

- Figur 11: zwei nebeneinander angeordnete Aufnahmebehälter zur Aufnahme von zusätzlichen Auffangbehältern von Beimischungen, beispielsweise Gewürzen.

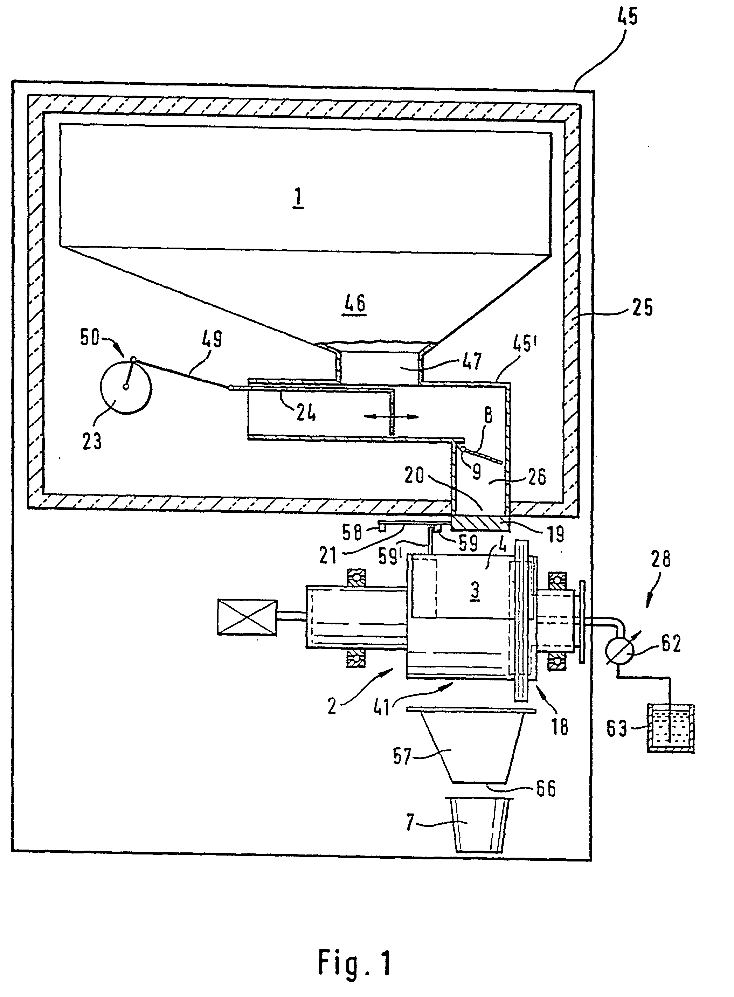

In der Zeichnung ist in Fig. 1 eine Vorrichtung zur Aufbereitung von Lebensmitteln bzw. Tiefkühlkost, insbesondere von Pommes frites, dargestellt, zu der ein in einem Gehäuse 45 vorgesehenes Kühlaggregat bzw. Kühlgehäuse 25 gehört, das ganzseitig so isoliert ist, daß die Lebensmittel in dem Kühlgehäuse auf die erforderlichen Tiefkühltemperaturen gebracht werden können, um sie langfristig zu lagern. Hierzu ist das Kühlgehäuse 25 ganzseitig mit Isoliermaterial umgeben. Innerhalb des Kühlgehäuses 25 befindet sich ein Sammelbehälter 1, der aus einem oberen, in etwa rechteckförmigen Teil besteht, an das sich ein trichterförmiges Teil 46 anschließt, das mit einer Auslaßöffnung 47 versehen ist. Die Auslaßöffnung läßt sich mit einer als Transportvorrichtung 24 ausgebildeten Verschlußvorrichtung für einen bestimmten Zeitraum zumindest teilweise verschließen, sodaß die Nahrungsmittel, insbesondere Pommes frites, nicht zerdrückt werden.

Die Transportvorrichtung 24 befindet sich gemäß Fig. 1 in einem Gehäuse 45', in dem die Transportvorrichtung 24 von einer in Fig. 1 dargestellten linken Stellung in eine Schließstellung gebracht werden kann und hierzu die Auslaßöffnung 47 zumindest teilweise verschließen kann, wobei in der Endlage- oder Schließstellung ein Spalt von ca. 5 cm - 10 cm bleiben kann.

Die Transportvorrichtung 24 wird mittels einer Antriebsvorrichtung 50 über ein Gestänge 49 angetrieben.

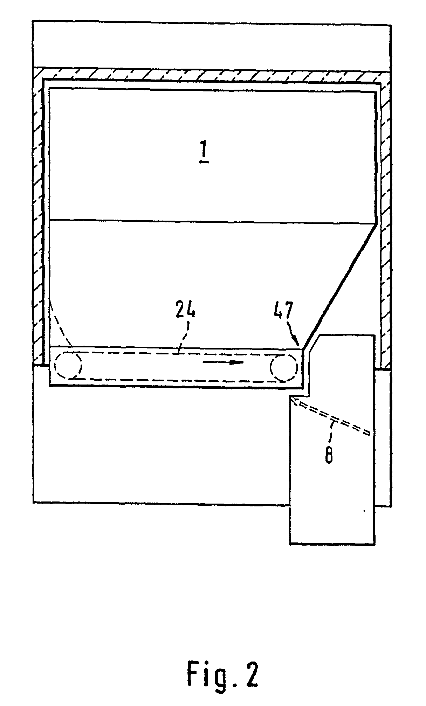

Da die Transportvorrichtung 24 aus einem winkelförmigen Element besteht, kann sie einerseits in der rechten Stellung die Öffnung 47 verschließen und in einer anderen Stellung die Öffnung 47 freigeben und dann beispielsweise aus der linken Stellung heraus das über die Öffnung 47 in das Gehäuse 45' abgegebene Gut einer weiteren Verschlußeinrichtung 8 zuführen, die beispielsweise als Dosiereinrichtung bzw. Klappe oder Waage ausgebildet sein kann. Gemäß Fig. 2 kann anstelle der Fördervorrichtung 24 auch ein Förderband vorgesehen sein, auf das die Lebensmittel über die Auslaßöffnung 47 des Behälters 1 abgegeben werden, so daß diese dann mittels der Fördervorrichtung 24 der Dosiereinrichtung 8 zugeführt werden können. Hierzu befindet sich in dem Behälter 1 die Auslaßöffnung 47 über dem Förderband 24. Die Fördereinrichtung 24 gemäß Fig. 1 und 2 wird über eine Antriebsvorrichtung 50 und über einen in der Zeichnung nicht dargestellten Motor betrieben. Ist auf der Dosiereinrichtung 8 eine bestimmte Menge der Lebensmittel angesammelt worden, so öffnet sich die Dosiereinrichtung bzw. die Klappe 8, schwenkt nach unten weg und befördert die Lebensmittel in einen Aufnahmeraum 26.

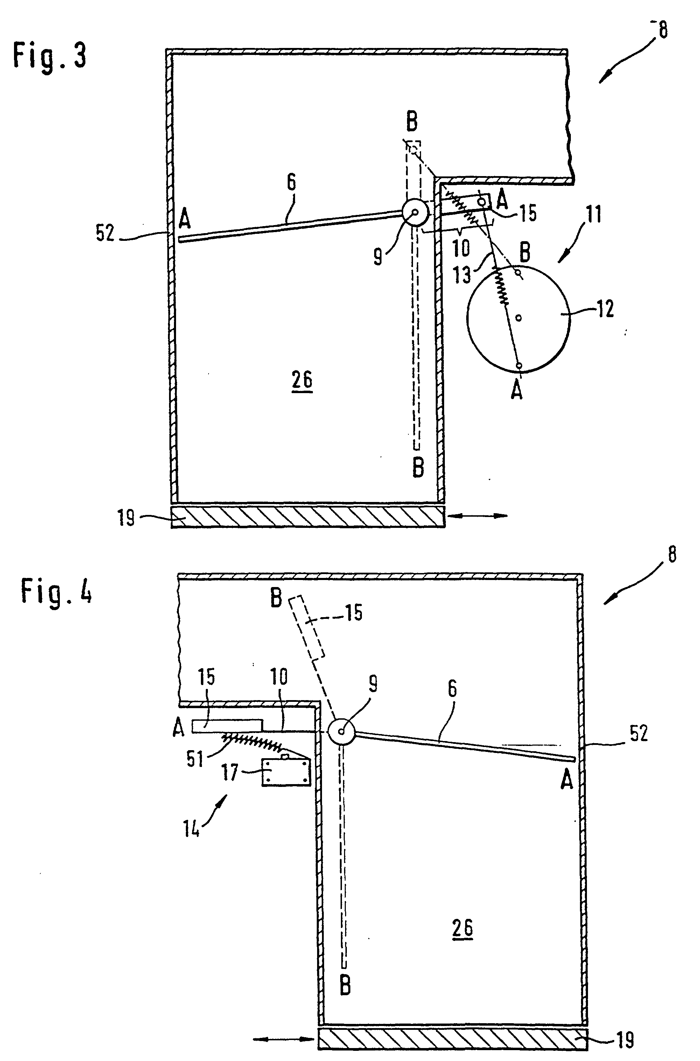

Die Dosiervorrichtung 8 ist gemäß Fig. 3 als Waage ausgebildet und in der nachfolgenden Beschreibung auch als erste Verschlußeinrichtung gekennzeichnet, da sie mehrere Funktionen ausführt.

Die erste Verschlußvorrichtung 8 dient, wie bereits erwähnt, auch als Dosiervorrichtung zur Portionierung der Lebensmittel bzw. der Pommes frites, die einem nachstehend beschriebenen Zubereitungsbehälter 2 zugeführt werden können. In Fig. 3 besteht die erste Verschlußeinrichtung 8 aus einer Klappe 6, die auf einer Achse 9 schwenkbar angeordnet ist. Mit der Klappe 6 ist ein einstellbares Gegengewicht 15 verbunden, das in etwa der Füllmenge entspricht, die dem Zubereitungsbehälter 2 zugeführt werden soll. Ist beispielsweise eine bestimmte Füllmenge bzw. Lebensmittel auf der Klappe 6 abgelegt, die dem Gewicht 15 entspricht, so wird die Klappe 6 gemäß Fig. 3 entgegengesetzt zum Uhrzeigerdrehsinn verschwenkt und gibt beispielsweise die Pommes frites in den nachfolgenden Aufnahmeraum 26 ab. Die Klappe 6 bzw. das Gegengewicht 15 ist ferner über eine Feder bzw. ein ein Spiel zulassendes Verbindungsteil bzw. Gestänge 13 mit einer Antriebsvorrichtung 11 verbunden, die eine Exzenterscheibe 12 aufweist, zu der ein in der Zeichnung nicht dargestellter Antriebsmotor gehört. Ferner befindet sich unter dem Gegengewicht 15 ein Stellglied 14 bzw. ein Zweistellungsschalter 17 mit einem Federelement 51, das bei einer bestimmten Stellung des Gewichts 15 die Feder von dem Zweistellungsschalter 17 entfernt und somit den Stromkreis schließt, so daß die Antriebsvorrichtung 11 die Klappe 6 aus der in ausgezogenen Linien dargestellten Stellung in eine in gestrichelten Linien dargestellte Stellung verschwenken kann. Jetzt kann die Füllmenge bzw. die Lebensmittel bzw. die Pommes frites in den Aufnahmeraum 26 abgegeben werden, der über eine zweite Verschlußeinrichtung 19 verschlossen ist. Nachdem die Füllmenge in den Auffangbehälter 26 abgegeben ist, verstellt die Exzenterscheibe 12 über das Gestänge 13 die Klappe 6 in ihre Schließstellung gemäß Fig. 3.

Es kann jedoch vorkommen, daß sich z. B. einige Pommes frites insbesondere im äußeren Bereich der Klappe 6 und in einem Wandteil 52 des Aufnahmeraums 26 festsetzen, so daß die Klappe nicht ihre endgültige Verschlußstellung einnehmen kann. Da das Verbindungselement 13 als Federelement ausgebildet ist, wird die Klappe 6 nach oben gedrückt, jedoch nicht weit genug, um das Federelement 51 gegen den Zweistellungsschalter 17 zu drücken. Solange der Zweistellungsschalter seine Schließstellung beibehält und den Stromkreis nicht unterbricht, dreht die Antriebsvorrichtung 11 weiter, öffnet die Klappe 6 erneut und bewirkt dadurch die endgültige Abgabe sämtlicher Pommes frites von der Klappe 6. Jetzt kann die Klappe über die Antriebsvorrichtung 11 ihre Schließstellung einnehmen, so daß über das Gewicht 15 bzw. einen Hebelarm 10 die Feder 51 den Zweistellungsschalter 17 aktiviert, den Stromkreis öffnet und dadurch die Antriebsvorrichtung 11 abschaltet. Die im Aufnahmeraum 26 befindliche Ware wird bis zur nächsten Aufbereitung von Ware bzw. der Ingangsetzung der Antriebsvorrichtung 23 zwischengelagert.

Wie insbesondere aus Fig. 1 und 3 hervorgeht, ist die Verschlußeinrichtung 19 auch aus einem Isolierteil gebildet, das gewährleistet, daß eine gute Kühlung im Kühlgehäuse 25 umd im Sammelbehälter 1 beibehalten werden kann. Haben also beispielsweise die Pommes frites den Aufnahmeraum 26 erreicht, so wird jetzt die dritte Verschlußeinrichtung 3 des Zubereitungsbehälters 2 in eine Offenstellung gebracht.

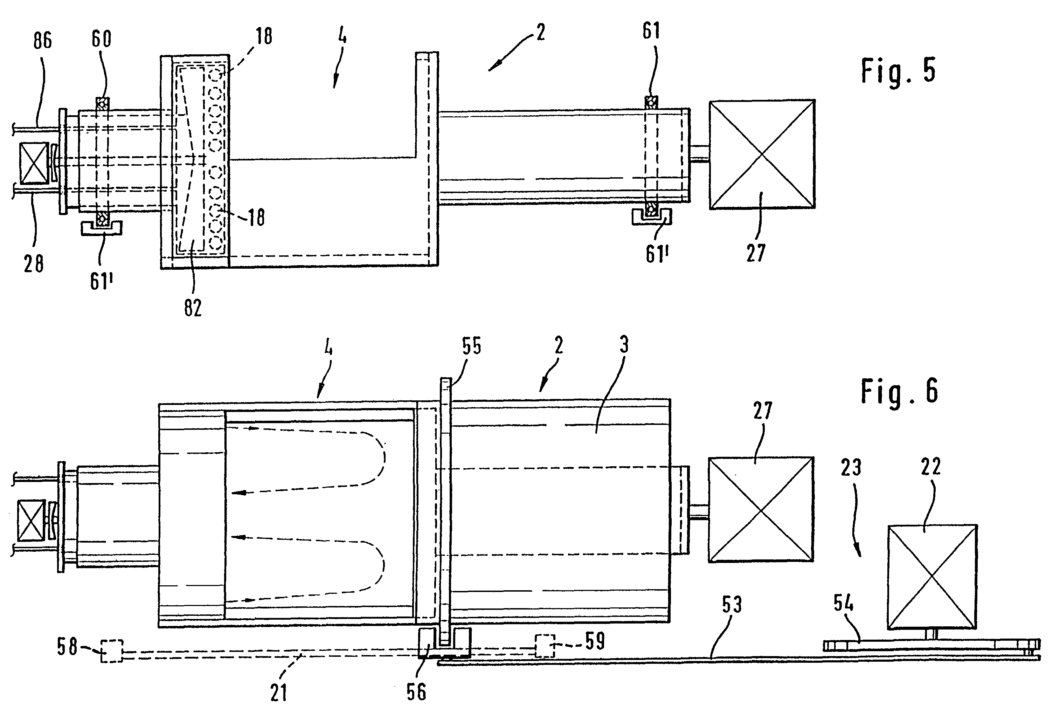

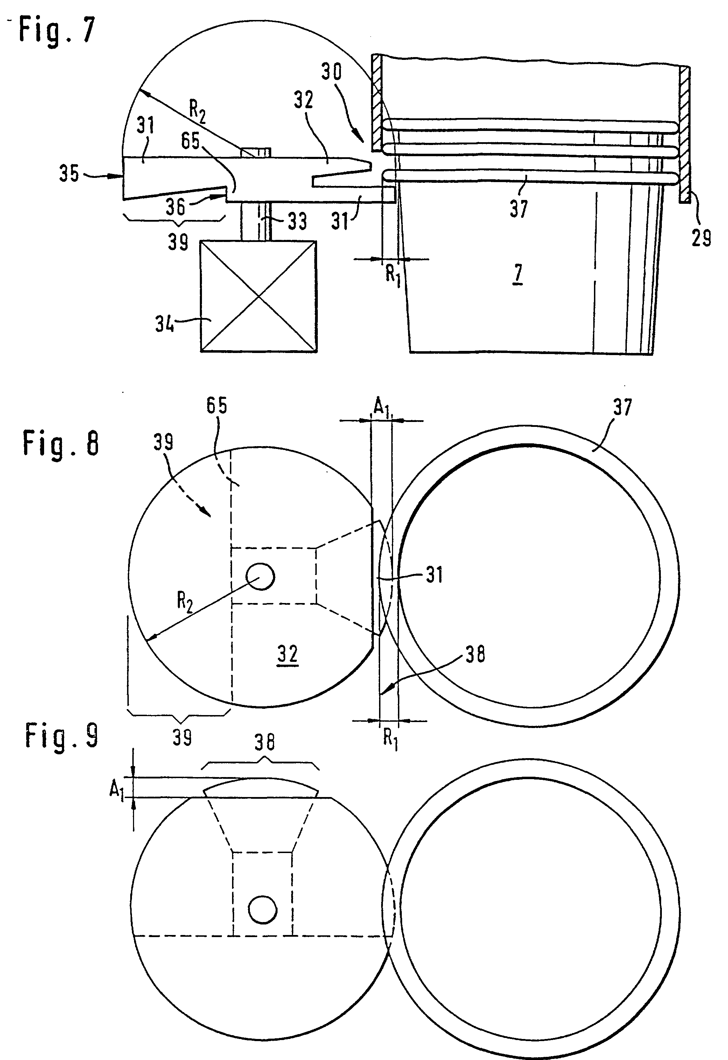

Die Verschlußeinrichtung 3 und der Zubereitungsbehälter 2 sind in den Fig. 5 und 6 näher veranschaulicht. Die Verschlußeinrichtung 3 besteht aus einem zylinderoder halbkreisförmig ausgebildeten Deckel, der eine Öffnung 4 des Zubereitungsbehälters 2 abdecken kann, wenn dieser aus der Stellung gemäß Fig. 6 in eine linke Stellung verstellt worden ist. Die Verschlußeinrichtung 3 bzw. der Deckel steht hierzu über ein Gestänge 53 und eine Exzenterscheibe 54 mit einer Antriebsvorrichtung 23 in Verbindung, die nach einem bestimmten Schaltimpuls den Deckel 3 aus seiner Schließstellung in eine die Öffnung 4 freigebende Stellung nach rechts verstellt (vgl. Fig. 6). Der Deckel 3 weist ferner einen Rand bzw. Kranz 55 auf, der den Zubereitungsbehälter 2 konzentrisch umgibt. Auf diese Weise ist es möglich, den Deckel 3 auch dann zu verschieben, wenn der Zubereitungsbehälter 2 um seine Achse gedreht wird. Hierzu ist das Gestänge 53 über eine Kulisse 56 mit dem Rand 55 des Deckels 3 wirkungsmäßig verbunden. Auf diese Weise kann die Öffnung eine Stellung gemäß Fig. 5 einnehmen und auch um 180° gedreht werden, so daß das behandelte Gut nach unten über einen Trichter 57, wie nachstehend beschrieben, einem Auffangbehälter 7 zugeführt werden kann.

Der Deckel 3 wird gemäß Fig. 1, nach Betätigung eines Schalters, über einen Antriebsmotor 22 in eine Offenstellung gebracht und anschließend die zweite Verschlußeinrichtung 19 des Aufnahmeraums 26. Hierzu ist die Verschlußeinrichtung 19 über ein Stellteil 21 bzw. eine Zwangführung und ein Mitnehmerelement 58 mit dem Deckel 3 verbunden. Das Stellteil 21 weist zwei mit Abstand zueinander angeordnete Mitnehmerteile 58 und 59 auf, zwischen denen das Mitnehmerelement 59' des Deckels 3 vorgesehen ist. Wird beispielsweise gemäß Fig. 1 der Deckel 3 in eine Offenstellung, d. h. nach links, verschoben, so stößt er nach einer bestimmten Wegstrecke gegen das Mitnehmerelement 58 und nimmt auch die zweite Verschlußeinrichtung 19 mit, so daß nach einer bestimmten Zeitverzögerung die Verschlußeinrichtung 19 eine Öffnung 20 freigibt. Hierdurch wird sichergestellt, daß die Pommes frites nicht auf den Deckel 3, sondern in die Öffnung 4 des Zubereitungsbehälters 2 eingegeben werden. Beim Verstellen der Verschlußeinrichtung 3 in ihre Schließstellung nimmt das Mitnehmerelement 59' über den Mitnehmer 59 die Verschlußeinrichtung 19 mit und bringt sie so in die Schließstellung.

Der Zubereitungsbehälter 2 weist gemäß Fig. 1, 5 eine Heizung bzw. eine Mikrowelleneinrichtung 18 auf, mittels derer die Nahrungsmittel bzw. die Pommes frites aufbereitet bzw. in einen eßbaren Zustand gebracht werden können. Die Heizung 18 befindet sich gemäß Fig. 5 auf der linken Seite des Behälters 2. Gemäß Fig. 5 ist die Heizung 18 als Widerstandsheizung ausgebildet. Um eine optimale Wärmeverteilung zu erreichen, ist hinter der Heizung 18 ein Ventilator bzw. ein Axialgebläse 82 vorgesehen, der/das eine Luftverwirbelung bzw. -umwälzung im Zubereitungsbehälter 2 bewirkt. Die Luft wird über eine Leitung 86 angesaugt, um den Luftdruck zu erhöhen und die Garzeit zu verkürzen.

Damit die Pommes frites nicht verklumpen, wird der Zubereitungsbehälter 2 mittels einer Antriebsvorrichtung 27 angetrieben, d. h. gedreht. Hierzu ist der Zubereitungsbehälter 2 in einem Kugellagerring 60 und 61 aufgenommen und in Lagern 61' abgestützt.

Damit bei der Zubereitung der vorfritierten Pommes frites gewährleistet wird, daß diese die richtige Bräunung erhalten und cross zubereitet werden können, ist der Zubereitungsbehälter 2 mit einer Zuführvorrichtung 28 für Wasser oder eine andere Substanz oder Flüssigkeit ausgestattet. Im Ausführungsbeispiel gemäß Fig. 5 wird während der Zubereitung der Pommes frites Wasser über die Zuführvorrichtung 28 in den Innenraum des Behälters 2 geleitet und gleichzeitig auch ein Druckanstieg im Behälter sichergestellt. Hierdurch wird die Aufbereitung der Pommes frites sehr günstig beeinflußt. Die Zuführungseinrichtung 28 steht hierzu über eine Pumpe 62 mit einem Wasserbehälter 63 in Verbindung.

Wie bereits erwähnt, wird der Zubereitungsbehälter 2 über die Antriebsvorrichtung 27 während der Zubereitung ständig angetrieben. Im Zubereitungsbehälter 2 können sich zahlreiche Rühr- bzw. Widerstandselemente befinden, die ein Auflockern der Pommes frites während der Zubereitungsphase sicherstellen, so daß diese nicht miteinander verbacken.

In dem Zubereitungsbehälter 2 können weitere in der Zeichnung nicht dargestellte Sensorelemente vorgesehen werden, die den Aufbereitungszustand einer Steuereinrichtung signalisieren, so daß nach Erreichen der Endphase des Aufbereitungsvorgangs über eine in der Zeichnung nicht dargestellte Steuervorrichtung die Verschlußeinrichtung 3 wieder in eine Offenstellung gebracht wird und dabei gleichzeitig die Öffnung 4 eine Position oberhalb des Trichters 57 und somit des Auffangbehälters 7 einnimmt. Damit zum entsprechenden Zeitpunkt ein Auffangbehälter in die gewünschte Aufnahmeposition gemäß Fig. 1 gebracht wird, sind zahlreiche Auffangbehälter (Fig. 7) in einer Halterung 29 bzw. einem Behälter zur Aufnahme der Auffangbehälter untergebracht. Die einzelnen Auffangbehälter 7 sind gemäß Fig. 7 stapelweise angeordnet. Jeweils der unterste Auffangbehälter kann dieser Halterung 29 entnommen und auf einem Aufnahmetisch bzw. einem Drehteller 40 abgestellt werden. Wie aus Fig. 7 hervorgeht, kann der unterste in der Halterung 29 aufgenommene Auffangbehälter 7 mittels eines Becherspenders einzeln entnommen werden. Der Becherspender besteht aus der Halterung 29 und einem Trennteil 32 sowie einem Halteelement 31, die einteilig miteinander verbunden sind. Das Trennteil 32 ist gemäß Fig. 8 um den Betrag A₁ segmentartig abgeschnitten, so daß er zum Rand 37 des Auffangbehälters 7 einen geringfügigen Abstand aufweist und den Fall des Auffangbehälters nach unten nicht behindert. Unterhalb des Trennteils 32 befindet sich das Halteelement 31, dessen äußerer Rand unter den Rand 37 des Auffangbehälters 7 geführt werden kann. Der Rand hat eine Größe R₁ und entspricht dem Teil A₁ des Halteelements 31, der unter den Rand 37 gebracht werden kann.

Das Halteelement 31 ist mit dem Trennteil 32 des unteren Halteelements 31 fest verbunden und auf einer Drehachse 33 gelagert. Diese Teile werden über eine Antriebsvorrichtung 34 gedreht. Dreht man gemäß Fig. 7 zwei miteinander verbundene Rotationskörper 35 und 36 mit dem Halteelement 31 und dem Trennteil 32, so bewegt sich das untere Halteelement 31 des Rotationskörpers 36 von dem Rand 37 weg und gibt den unteren Auffangbehälter 7 frei, da nun ein gegenüberliegendes Teil in den Bereich des Rands 37 gebracht wird, diesen jedoch nicht berührt. Nun kann der Auffangbehälter 7 nach unten fallen. Damit sichergestellt wird, daß der Behälter 7 nach unten fällt, kann das obere Halteelement 31 keilförmig ausgebildet sein und zwischen die beiden Ränder 37 von zwei Auffangbehältern 7 geführt werden. Bei diesem Drehvorgang bewegt sich gleichzeitig das obere Halteelement 31 unter den oberen Rand 37 des nachfolgenden Auffangbehälters 7 und hält jetzt den untersten Auffangbehälter fest. Das Trennteil 32 befindet sich dann ebenfalls auf der gegenüberliegenden Seite des Halteelements 31. Auf diese Weise wird sichergestellt, daß jeweils nur der untere Auffangbehälter 7 entnommen werden kann, während der darüberliegende Auffangbehälter 7 durch das entsprechende Halteelement 31 des oberen bzw. des unteren Rotationskörpers 35 und 36 gehalten wird. Der Motor 34 des Becherspenders wird also dann aktiviert, wenn im Zubereitungsbehälter 2 die Nahrungsmittel zubereitet sind.

Wie aus Fig. 7 ferner hervorgeht, können die beiden Rotationskörper 35 und 36 einen Radius R₂ und jeweils einen segmentartigen Abschnitt 38 und 39 aufweisen, die es erlauben, daß entweder der obere Rotationskörper 35 oder der untere Rotationskörper 36 gestattet, daß die Auffangbehälter 7 nach unten weiterbewegt werden können, so daß jeweils nur ein Auffangbehälter nach unten abgenommen werden kann. Hierzu ist es vorteilhaft, daß der Halterand 37 eine Breite R₁ aufweist, die in etwa der Breite A₁ des segmentartigen Abschnitts 38 bzw. 39 entspricht.

Ferner ist es vorteilhaft, daß das Halteelement 31 des oberen Rotationskörpers 35 gegenüber dem Halteelement 31 des unteren Rotationskörpers 36 um einen Winkel zwischen 45° und 230°, insbesondere um 180°, versetzt ist.

Sind die Nahrungsmittel bzw. die Pommes frites im Zubereitungsbehälter 2 fertiggestellt, so kann dieser mittels der Antriebsvorrichtung 27 in eine um 180° gedrehte Position gebracht werden, in der sich die Öffnung 4 oberhalb des Trichters 57 befindet, so daß die Nahrungsmittel über den Trichter 57 dem Auffangbehälter 7 zugeführt und mittels des Aufnahmetisches 40, der als Drehteller ausgebildet sein kann, in den Bereich einer Abgabeöffnung 66 des Trichters 57 bewegt werden können. Es ist jedoch auch möglich, daß der Aufnahmetisch 40 mit Förderelementen 81 ausgestattet ist, die die einzelnen Auffangbehälter 7 weiterbewegen, bis sie unter den Trichter 57 gelangen.

Sobald die Nahrungsmittel bzw. die Pommes frites im Zubereitungsbehälter 2 fertiggestellt sind, kann der Zubereitungsbehälter 2 um 180° gedreht und gleichzeitig auch die Öffnung 4 mittels der Verschlußeinrichtung 3 freigegeben werden. Die einzelnen Arbeitsabläufe folgen dem zeitlichen Ablauf und werden mittels eines Softwareprogramms so gesteuert, daß die einzelnen Arbeitsschritte von der Eingabe der Nahrungsmittel in den Behälter 1 bis zur Abgabe in den Auffangbehälter 7 genau gesteuert werden.

Im vorderen Bereich des Trichters 57 befindet sich eine zweite Halterung 70 bzw. zwei zylinderförmige Gehäuse 71 und 72 mit einer gemeinsamen Abgabeöffnung 75.

In den beiden Gehäusen 71 und 72 befinden sich kugelartige Behälter 73, die zur Aufnahme von Beimischungen, Gewürzen, Senf, Ketchup oder dergleichen dienen. Beispielsweise ist es möglich, in dem linken Gehäuse 71 den Behälter 73 mit Ketchup und im rechten Gehäuse 72 den Behälter 73 für Senf oder andere Gewürze vorzusehen. Je nachdem, welche Nahrungsmittel im Zubereitungsbehälter 2 aufbereitet werden, können die entsprechenden Beimischungen aus dem Gehäuse 71 oder 72 separat abgegeben werden.

Damit die einzelnen Behälter 73 in den Gehäusen 71 und 72 nicht festklemmen, kann im unteren Bereich der Gehäuse 71 und 72 ein federelastisch ausgebildetes Förderelement bzw. Trennelement oder Rührteil 44 vorgesehen sein, das dazu beiträgt, daß die einzelnen Behälter 73 aufgewirbelt werden und somit nicht miteinander verklemmen und sich nicht im Gehäuse festsetzen. Im Bereich der Öffnung 75 der Gehäuse 71 und 72 befindet sich ein weiteres Förderelement 76, das die Behälter 73 entweder aus dem linken Gehäuse 71 oder aus dem rechten Gehäuse 72 der Abgabeöffnung 75 zuführt, so daß dann die Behälter 73 über eine Rutsche 77 abgegeben werden können.

Das Trennelement bzw. das Rührteil 44 wird über eine Antriebsvorrichtung 79 angetrieben. Die Antriebsvorrichtung weist das Förderelement 76 auf, in dem sich eine Aussparung 80 befindet, in die die Behälter 73 abgegeben werden, so daß sie dann der Austragöffnung 75 zugeführt werden können. Hierzu wird das Förderelement 76 über die Antriebsvorrichtung 79 mit seinem Ausschnitt entweder in das linke oder rechte Gehäuse 71, 72 bewegt, nimmt in seiner Aussparung 80 den Behälter 73 aus dem Gehäuse 71 oder 72 mit und führt diesen der Austragöffnung 75 zu. Hierdurch wird sichergestellt, daß jeweils die gewünschte Beimischung, entweder Senf oder Ketchup, dem Nahrungsmittel zur Verfügung gestellt werden kann.

Das Verfahren zur Aufbereitung von Lebensmitteln wird durch folgende Verfahrensschritte gekennzeichnet:

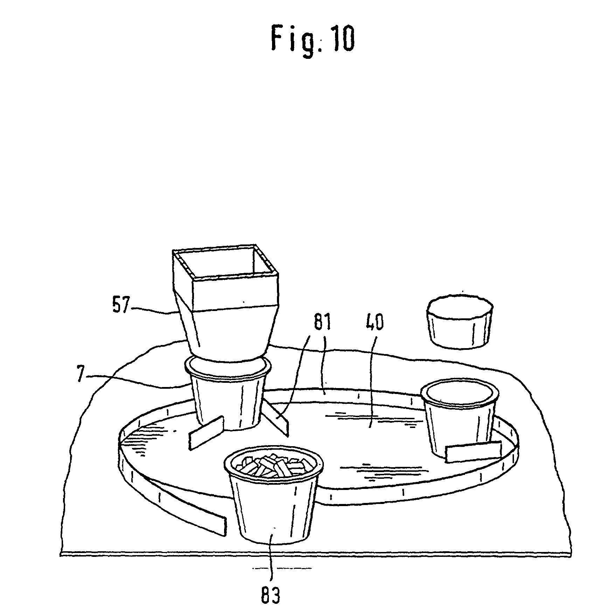

Die in dem Sammelbehälter 1 aufgenommenen Lebensmittel oder die Pommes frites werden über eine Auslaßöffnung 47 der Dosiervorrichtung 8 zugeführt, die eine bestimmte Füllmenge über die Auslaßöffnung 20 dem Zubereitungsbehälter 2 zuführt, der erst dann in eine Offenstellung verstellbar ist, wenn die Verschlußeinrichtung 3 des Zubereitungsbehälters 2 in eine Offenstellung gebracht wird. Der gefüllte Behälter 7 wird mittels des Aufnahmetisches 40 in eine Entnahmeposition 83 in Figur 10 befördert und kann dann von einer Bedienungsperson entnommen werden. Durch den weiteren Ablauf gelangt ein weiterer Behälter 7 unter den Trichter 57. Damit ist der komplette Betriebsablauf beendet.

### Bezugszeichenliste

- 1: Sammelbehälter
- 2: Zubereitungsbehälter
- 3: dritte Verschlußeinrichtung = Deckel
- 4: Öffnung
- 6: Klappe
- 7: Auffangbehälter
- 8: erste Verschlußeinrichtung, Dosiereinrichtung, (Klappe), Waage
- 9: Achse
- 10: Hebelarm
- 11: Antriebsvorrichtung
- 12: Exzenterscheibe
- 13: Verbindungsteil = Gestänge bzw. Feder
- 14: Stellglied
- 15: Gewicht
- 17: Zweistellungsschalter
- 18: Heizung bzw. Mikrowelleneinrichtung
- 19: zweite Verschlußeinrichtung
- 20: Auslaßöffnung von Aufnahmeraum 26
- 21: Stellteil, Zwangführung
- 22: Antriebsmotor
- 23: Antriebsvorrichtung
- 24: Transportvorrichtung = Förderband
- 25: isoliertes Gehäuse bzw. Kühlgehäuse
- 26: Aufnahmeraum
- 27: Antriebsvorrichtung
- 28: Zuführeinrichtung für Wasser oder eine andere Substanz oder Flüssigkeit
- 29: Halterung oder Behälter zur Aufnahme von Auffangbehältern 7
- 30: Abgabeöffnung der Halterung 29
- 31: Halteelement
- 32: Trennteil
- 33: Drehachse
- 34: Antriebsvorrichtung
- 35: Rotationskörper
- 36: Rotationskörper
- 37: Halterand
- 38: segmentartiger Abschnitt
- 39: segmentartiger Abschnitt
- 40: Aufnahmetisch Drehteller
- 41: Abgabebereich
- 44: Trennelement oder Rührteil
- 45: Gehäuse
- **45'**: Gehäuse
- 46: trichterförmiges Teil
- 47: Auslaßöffnung
- 49: Gestänge
- 50: Antriebsvorrichtung
- 51: Federelement
- 52: Wandteil
- 53: Gestänge
- 54: Exzenterscheibe
- 55: Rand = Kranz
- 56: Kulisse
- 57: Trichter
- 58: Mitnehmerelement
- 59: Mitnehmerelement
- 59': Mitnehmerelement
- 60: Rugellagerring
- 61: Kugellagerring
- 61': Lager
- 62: Pumpe
- 63: Wasserbehälter
- 65: Trennteil
- 66: Abgabeöffnung des Trichters 57
- 70: Halterung
- 71: Gehäuse
- 72: Gehäuse
- 73: Behälter
- 75: Öffnung
- 76: Förderelement
- 77: Rutsche
- 79: Antriebsvorrichtung
- 80: Aussparung
- 81: Förderelement
- 82: Axialgebläse
- 83: Entnahmeposition
- 86: Leitung

## Patentansprüche

1. Vorrichtung zur Aufbereitung von Lebensmitteln, die folgende Merkmale aufweist:
a. die Vorrichtung weist einen Sammelbehälter (1) zur Aufnahme von Lebensmitteln auf,
b. der Sammelbehälter (1) ist über eine Auslaßöffnung (20) mit einer Öffnung (4) eines Zubereitungsbehälters (2) verbunden, die über eine dritte Verschlußeinrichtung (3) verschließbar ist,
c. die Auslaßöffnung (20) des Sammelbehälters (1) ist über eine erste Verschlußeinrichtung (8) verschließbar, die in Abhängigkeit einer Stellgröße oder einer Lebensmittelmenge in eine Öffnungsund/oder Schließstellung bringbar ist,
d. der Zubereitungsbehälter (2) ist mit einer Druckerhöhungseinrichtung und einer Zuführeinrichtung (28) für Wasser oder für eine andere Substanz oder Flüssigkeit verbunden,
e. der Zubereitungsbehälter (2) steht über mindestens eine Öffnung (4) mit einem Auffangbehälter (7) in Verbindung.

2. Vorrichtung nach Anspruch 1, **dadurch gekennzeichnet, daß** die vor der Öffnung des Zubereitungsbehälters (2) vorgesehene erste Verschlußeinrichtung (8) als Dosiereinrichtung ausgebildet ist und zur Portionierung der Lebensmittel dient, die dem Zubereitungsbehälter (2) zugeführt werden.

3. Vorrichtung nach Anspruch 2, **dadurch gekennzeichnet, daß** die vor der Öffnung des Zubereitungsbehälters (2) vorgesehene erste Verschlußeinrichtung (8) als Waage ausgebildet ist, die aus einer auf einer Achse (9) verschwenkbar angeordneten Klappe (6) und einem mit der Klappe (6) verbundenen Hebelarm (10) besteht, der mit einer Antriebsvorrichtung (11) verbunden ist.

4. Vorrichtung nach Anspruch 1, **dadurch gekennzeichnet, daß** die Antriebsvorrichtung (11) eine Exzenterscheibe (12) aufweist, die über ein Verbindungsteil (13) mit dem Hebelarm (10) wirkungsmäßig verbunden ist.

5. Vorrichtung nach einem der vorhergehenden Ansprüche, **dadurch gekennzeichnet, daß** der ersten Verschlußeinrichtung (8) das Stellglied (14) zugeordnet ist, das bei einer bestimmten Füllmenge der Lebensmittel und einer sich daraus ergebenden Steilgröße ein Verstellen der Klappe (6) in eine Öffnungsstellung und nach Abgabe der Lebensmittel ein Verstellen in eine Schließstellung bewirkt.

6. Vorrichtung nach Anspruch 1, **dadurch gekennzeichnet, daß** die erste Verschlußeinrichtung (8) einen Hebelarm (10) aufweist, wobei an dem Hebelarm (10) der Klappe (6) ein der Füllmenge entsprechendes Gewicht (15) angeordnet ist.

7. Vorrichtung nach einem der vorhergehenden Ansprüche, **dadurch gekennzeichnet, daß** der Hebelarm (10) über ein elastisch ausgebildetes Stellelement (16) mit einem Zweistellungsschalter (17) verbunden ist, der nur dann aktivierbar ist, wenn die Klappe (6) ihre Endlage- oder Schließstellung erreicht hat.

8. Vorrichtung nach einem der vorhergehenden Ansprüche, **dadurch gekennzeichnet, daß** das zwischen der Antriebsvorrichtung (11) und dem Hebel (10) vorgesehene Verbindungsteil (13) als Federelement ausgebildet ist, das so ausgelegt ist, daß bei einer bestimmten Gewichtsmenge die Klappe (6) in eine Öffnungsstellung verstellbar ist.

9. Vorrichtung nach einem der vorhergehenden Ansprüche, **dadurch gekennzeichnet, daß** der Zubereitungsbehälter (2) eine verstellbare dritte Verschlußeinrichtung (3) aufweist, die über einen Motor in eine Schließ- oder Öffnungsstellung bringbar ist.

10. Vorrichtung nach einem der vorhergehenden Ansprüche, **dadurch gekennzeichnet, daß** die dritte Verschlußeinrichtung (3) des Zubereitungsbehälters (2) in Wirkverbindung mit einer zweiten Verschlußeinrichtung (19) steht, über die die Auslaßöffnung (20) des Zubereitungsbehälters (2) verschließbar ist.

11. Vorrichtung nach einem der vorhergehenden Ansprüche, **dadurch gekennzeichnet, daß** die zweite Verschlußeinrichtung (19) des Sammelbehälters (1) über ein Stellteil (21) mit der dritten Verschlußeinrichtung (3) des Zubereitungsbehälters (2) verbunden ist.

12. Vorrichtung nach einem der vorhergehenden Ansprüche, **dadurch gekennzeichnet, daß** ein Antriebsmotor (22) über das Stellteil (21) mit der dritten Verschlußeinrichtung (3) und über eine Spiel zulassende Verbindung bzw. das Stellglied (21) zwangweise mit der zweiten Verschlußeinrichtung (19) in Verbindung steht.

13. Vorrichtung nach einem der vorhergehenden Ansprüche, **dadurch gekennzeichnet, daß** vor der Dosiereinrichtung (8) eine Transportvorrichtung (24) vorgesehen ist, die mit einer Antriebsvorrichtung (23) in Wirkverbindung steht, die die Lebensmittel der Dosiervorrichtung (8) zuführt.

14. Vorrichtung nach einem der vorhergehenden Ansprüche, **dadurch gekennzeichnet, daß** der Sammelbehälter (1) und die Dosiereinrichtung (8) sowie die Transportvorrichtung (24) in einem isolierten Gehäuse bzw. Kühlgehäuse (25) vorgesehen sind.

15. Vorrichtung nach einem der vorhergehenden Ansprüche, **dadurch gekennzeichnet, daß** das Kühlgehäuse (25) über eine isolierte Verschlußeinrichtung oder die zweite Verschlußeinrichtung (19) verschließbar ist.

16. Vorrichtung nach einem der vorhergehenden Ansprüche, **dadurch gekennzeichnet, daß** zwischen der Dosiereinrichtung (8) und der isolierten Verschlußeinrichtung oder der zweiten Verschlußeinrichtung (19) ein Aufnahmeraum (26) vorgesehen ist.

17. Vorrichtung nach einem der vorhergehenden Ansprüche, **dadurch gekennzeichnet, daß** die dritte Verschlußeinrichtung (3) des Zubereitungsbehälters (2) zuerst geöffnet wird und dann mit zeitlicher Verzögerung über die Zwangführung (21) die zweite Verschlußeinrichtung (19) des Kühlgehäuses (25) und/oder des Aufnahmeraums (26) geöffnet wird.

18. Vorrichtung nach einem der vorhergehenden Ansprüche, **dadurch gekennzeichnet, daß** der Zubereitungsbehälter (2) über eine Antriebsvorrichtung (27) antreibbar ist.

19. Vorrichtung nach einem der vorhergehenden Ansprüche, **dadurch gekennzeichnet, daß** der Zubereitungsbehälter (2) über die Heizung in Abhängigkeit des aufgenommenen Guts bzw. der Pommes frites beheizbar ist.

20. Vorrichtung nach einem der vorhergehenden Ansprüche, **dadurch gekennzeichnet, daß** die Antriebsvorrichtung (27) mit einer Steuereinrichtung zur Beeinflussung der Laufzeit und/oder der Antriebsdrehzahl des Zubereitungsbehälters (2) ausgestattet ist.

21. Vorrichtung nach einem der vorhergehenden Ansprüche, **dadurch gekennzeichnet, daß** nach der Aufbereitung der Lebensmittel mittels des Zubereitungsbehälters (2) die Öffnung (4) automatisch geöffnet und der Auffangbehälter (7) mit den Lebensmitteln geleert wird.

22. Vorrichtung zur Aufbereitung von Lebensmitteln, **gekennzeichnet durch** folgende Merkmale:
a. die Vorrichtung weist eine Halterung (29) auf, in der mehrere Auffangbehälter (7) bzw. Behälter zur Aufnahme von Lebensmitteln stapelbar sind,
b. im Bereich der Halterung (29) oder einer Abgabeöffnung (30) der Halterung (29) ist mindestens ein Halteelement (31) vorgesehen, das den Auffangbehälter (7) in der Halterung festhält,
c. im Bereich der Abgabeöffnung (30) der Halterung (29) ist ein Trennteil (32) vorgesehen, das zumindest einen Auffangbehälter (7) von den übrigen in der Halterung (29) aufgenommenen Auffangbehältern (7) derart trennt, daß der Auffangbehälter (7) in eine Position zur Aufnahme von Gut bzw. Lebensmitteln bringbar ist.

23. Vorrichtung nach Anspruch 1 oder 22, **dadurch gekennzeichnet, daß** das Halteelement (31) und das Trennteil (32) auf einer Drehachse (33) angeordnet sind.

24. Vorrichtung nach Anspruch 1 oder 22, **dadurch gekennzeichnet, daß** das Halteelement (31) und das Trennteil (32) über eine Antriebsvorrichtung (34) gemeinsam antreibbar sind.

25. Vorrichtung nach Anspruch 1 oder 22, **dadurch gekennzeichnet, daß** das Halteelement (31) und das Trennteil (32) aus zwei miteinander verbundenen Rotationskörpern (35, 36) bestehen, die gemeinsam über die Antriebsvorrichtung (34) antreibbar sind.

26. Vorrichtung nach Anspruch 1 oder 22, **dadurch gekennzeichnet, daß** das obere Trennteil (32) der beiden Rotationskörper (35, 36) im wesentlichen kreisförmig ausgebildet ist und ein Teil dieses kreisförmigen Rotationskörpers im Bereich seines Außenumfangs segmentartig abgeschnitten ist.

27. Vorrichtung nach einem der vorhergehenden Ansprüche, **dadurch gekennzeichnet, daß** der Auffangbehälter (7) einen Halterand (37) aufweist, unter den das Halteelement (31) des oberen Rotationskörpers (35) bringbar ist.

28. Vorrichtung nach einem der vorhergehenden Ansprüche, **dadurch gekennzeichnet, daß** der Halterand (37) eine Breite R₁ aufweist, die in etwa der Breite A₁ des segmentartigen Abschnitts (38 bzw. 39) entspricht.

29. Vorrichtung nach einem der vorhergehenden Ansprüche, **dadurch gekennzeichnet, daß** der Auffangbehälter (7) einen Halterand (37) aufweist, unter den das Halteelement (31) des unteren Rotationskörpers (36) bringbar ist.

30. Vorrichtung nach einem der vorhergehenden Ansprüche, **dadurch gekennzeichnet, daß** das Halteelement (31) des oberen Rotationskörpers (36) gegenüber dem Halteelement (31) des unteren Rotationskörpers (36) um einen Winkel zwischen 45° und 230° oder um 180° versetzt ist.

31. Vorrichtung nach Anspruch 1 und 22, **gekennzeichnet durch** folgende Merkmale:
a. die Vorrichtung weist im Bereich der Abgabeöffnung der Halterung (29) zur Aufnahme der Auffangbehälter (7) einen Aufnahmetisch, einen Drehteller (40) oder einen Aufnahmetisch mit Förderelementen (81) auf, auf die die Auffangbehälter (7) abstellbar sind und nacheinander unter die Auslaßöffnung bzw. den Abgabebereich (41) des Zubereitungsbehälters (2) bringbar sind,
b. dem Aufnahmetisch oder dem Drehteller (40) ist eine weitere Halterung oder mindestens ein Gehäuse (71 oder 72) zur Aufnahme von Auffangbehältern (73) zugeordnet, in denen Beimischungen oder Gewürze aufgenommen werden können, die dem ersten Auffangbehälter (7) zugegeben werden sollen.

32. Vorrichtung nach einem der vorhergehenden Ansprüche, **dadurch gekennzeichnet, daß** in der Halterung oder in den Gehäusen (71, 72) zur Aufnahme von Auffangbehältern (73) mindestens ein Trennelement oder ein Rührteil (44) vorgesehen ist, mittels dessen die Auffangbehälter (73) voneinander getrennt werden.

33. Verfahren zur Aufbereitung von Lebensmitteln, das folgende Verfahrensschritte aufweist:
a. die in dem Sammelbehälter (1) aufgenommenen Lebensmittel oder die Pommes frites werden über eine Auslaßöffnung der Dosiervorrichtung (8) zugeführt, die eine bestimmte Füllmenge über die Auslaßöffnung (20) des Zubereitungsbehälters (2) der zweiten Verschlußeinrichtung (19) zuführt, die erst dann in eine Offenstellung verstellbar ist, wenn die dritte Verschlußeinrichtung (3) des Zubereitungsbehälters (2) in eine Offenstellung gebracht ist,
b. die Lebensmittel oder die Pommes frites werden im Zubereitungsbehälter (2), der mit einer Druckerhöhungseinrichtung und einer Zuführeinrichtung (28) für Wasser oder für eine andere Substanz oder Flüssigkeit verbunden ist, in einen eßbaren Zustand gebracht,
c. nach Zubereitung der Lebensmittel werden diese in einen Auffangbehälter (7) abgegeben,
d. der Auffangbehälter (7) wird von dem nachfolgenden Auffangbehälter (7) mittels einer Trennvorrichtung getrennt und auf einen Aufnahmetisch (40) abgestellt und kann dann nach Befüllung von einer Bedienungsperson entnommen werden,
e. dem ersten Auffangbehälter (7) kann vor der Entnahme über eine zweite Zuführeinrichtung ein weiterer Auffangbehälter (73) mit Beimischungen oder Gewürzen zugeführt werden.

## Claims

1. A device for the preparation of foods, having the following features:
a. the device has a storage container (1) for receiving foods,
b. the storage container (1) is connected via an outlet opening (20) with an opening (4) of a preparation container (2) which can be closed via a third closing device (3),
c. the outlet opening (20) of the storage container (1) can be closed via a first closing device (8), which can be moved into an open and/or closed position depending on a control variable or an amount of food,
d. the preparation container (2) is connected with a pressure-increase device and/or a supply device (28) for water or for another substance or liquid,
e. the preparation container (2) is connected via at least one opening (4) to a collecting container (7).

2. The device according to claim 1, **characterized in that** the first closing device (8), provided before the opening of the preparation container (2), is implemented as a metering device and serves to portion out the foods that are fed to the preparation container (2).

3. The device according to claim 2, **characterized in that** the first closing device (8), provided before the opening of the preparation container (2), is implemented as a set of scales consisting of a flap (6), arranged in a pivoting manner on an axis (9), and a lever arm (10), connected to the flap (6), which is connected to a drive device (11).

4. The device according to claim 1, **characterized in that** the drive device (11) has a cam wheel (12) which is operatively engaged with the lever arm (10) via a connecting part (13).

5. The device according to one of the preceding claims, **characterized in that** the actuator (14) is allocated to the first closing device (8), with the actuator causing a shift of the flap (6) to an open position in response to a specific filling amount of the food and to a control variable resulting therefrom and, after the foods have been discharged, causing a shift to a closed position.

6. The device according to claim 1, **characterized in that** the first closing device (8) has a lever arm (10), with a weight (15) corresponding to the filling amount being located on the lever arm (10) of the flap (6).

7. The device according to one of the preceding claims, **characterized in that** the lever arm (10) is connected via a flexibly implemented control element (16) to a two-position switch (17), which can only be activated when the flap (6) has reached its end position or closed position.

8. The device according to one of the preceding claims,
**characterized in that** the connecting part (13) provided between the drive device (11) and the lever (10) is implemented as a spring element, which is designed in such a way that, at a specific amount of weight, the flap (6) can be shifted to an open position.

9. The device according to one of the preceding claims, **characterized in that** the preparation container (2) has an adjustable third closing device (3) which can be moved into a closed or open position by means of a motor.

10. The device according to one of the preceding claims, **characterized in that** the third closing device (3) of the preparation container (2) is operatively engaged with a second closing device (19), via which the outlet opening (20) of the preparation container (2) can be closed.

11. The device according to one of the preceding claims, **characterized in that** the second closing device (19) of the storage container (1) is connected to the third closing device (3) of the preparation container (2) via a control element (21).

12. The device according to one of the preceding claims, **characterized in that** a drive motor (22) is connected to the third closing device (3) via the control element (21) and automatically with the second closing means (19) via a connection that allows play and/or via the actuator (21).

13. The device according to one of the preceding claims, **characterized in that,** before the metering device (8), a transport device (24) is provided which is operatively engaged with a drive device (23) that feeds the foods to the metering device (8).

14. The device according to one of the preceding claims, **characterized in that** the storage container (1) and the metering device (8), as well as the transport device (24), are provided in an insulated housing and/or a refrigerated housing (25).

15. The device according to one of the preceding claims, **characterized in that** the refrigerated housing (25) can be closed via an insulated closing device or the second closing device (19).

16. The device according to one of the preceding claims, **characterized in that** a receiving space (26) is provided between the metering device (8) and the insulated closing device or the second closing device (19).

17. The device according to one of the preceding claims, **characterized in that** the third closing device (3) of the preparation container (2) is opened first and then, with a time delay, the second closing device (19) of the refrigerated housing (25) and/or of the receiving space (26) is opened via the automatic guide (21).

18. The device according to one of the preceding claims, **characterized in that** the preparation container (2) can be driven via a drive device (27).

19. The device according to one of the preceding claims, **characterized in that** the preparation container (2) can be heated by the heater depending on the product and/or the french fries held therein.

20. The device according to one of the preceding claims, **characterized in that** the drive device (27) is equipped with a control device for influencing the running time and/or the drive speed of the preparation container (2).

21. The device according to one of the preceding claims, **characterized in that,** after the processing of the foods by means of the preparation container (2), the opening (4) is automatically opened and the collecting container (7) with the foods is emptied.

22. The device for the preparation of foods, **characterized by the following features:**
a. the device has a holder (29) in which multiple collecting containers (7) and/or containers for receiving foods can be stacked,
b. in the area of the holder (29) or of a discharge opening (30) of the holder (29), at least one holding element (31) is provided, which secures the collecting container (7) in the holder,
c. in the area of the discharge opening (30) of the holder (29), a separating part (32) is provided, which separates at least one collecting container (7) from the other collecting containers (7) held in the holder (29) in such a way that the collecting container (7) can be moved into a position for receiving the product and/or foods.

23. The device according to claim 1 or 22, **characterized in that** the holding element (31) and the separating part (32) are located on a rotational axis (33).

24. The device according to claim 1 or 22, **characterized in that** the holding element (31) and the separating part (32) can be driven together via a drive device (34).

25. The device according to claim 1 or 22, **characterized in that** the holding element (31) and the separating part (32) consist of two rotational bodies (35, 36) connected to each other, which can be jointly driven by means of the drive device (34).

26. The device according to claim 1 or 22, **characterized in that** the upper separating part (32) of the two rotational bodies (35, 36) is implemented in an essentially a circular shape, and one part of this circular rotational body is cut off in a segmented way in the area of its external circumference.

27. The device according to one of the preceding claims, **characterized in that** the collecting container (7) has a holding rim (37), under which the holding element (31) of the upper rotational body (35) can be placed.

28. The device according to one of the preceding claims, **characterized in that** the holding rim (37) has a width R₁ which approximately corresponds to the width A₁ of the segmented section (38 and/or 39).

29. The device according to one of the preceding claims, **characterized in that** the collecting container (7) has a holding rim (37), under which the holding element (31) of the lower rotational body (36) can be placed.

30. The device according to one of the preceding claims, **characterized in that** the holding element (31) of the upper rotational body (36) is offset by an angle between 45° and 230° or by 180° relative to the holding element (31) of the lower rotational body (36).

31. The device according to claims 1 and 22, **characterized by the following features:**
a. to receive the collecting containers (7), the device has a receiving table, a turntable (40), or a receiving table with conveying elements (81) in the area of the discharge opening of the holder (29), on which the collecting containers (7) can be placed and can be moved, one after the other, under the outlet opening and/or the discharge area (41) of the preparation container (2),
b. an additional holder or at least one housing (71 or 72) for receiving collecting containers (73), in which condiments or seasonings which are to be added to the first collecting container (7) can be held, is allocated to the receiving table or the turntable (40).

32. The device according to one of the preceding claims, **characterized in that,** in the holder or in the housings (71, 72) for receiving collecting containers (73), at least one separating element or an agitating part (44) is provided, by means of which the collecting containers (73) are separated from one another.

33. A process for the preparation of foods, having the following process steps:
a. the foods or the french fries present in the storage container (1) are fed via an outlet opening of the metering device (8), which feeds a specific filling amount, via the outlet opening (20) of the preparation chamber (2), to the second closing device (19), which can only be shifted to an open position when the third closing device (3) of the preparation container (2) has been moved into an open position,
b. the foods or the french fries are brought into an edible state in the preparation container (2), which is connected with a pressure-increase device and a supply device (28) for water or for another substance or fluid,
c. after preparation of the foods, they are discharged into a collecting container (7),
d. the collecting container (7) is separated from the following collecting container (7) by means of a separating device and placed on a receiving table (40), and can then be removed an operator after it has been filled,
e. before removal, another collecting container (73) with condiments or seasonings can be fed to the first collecting container (7) by means of a second feed device.

## Revendications

1. Dispositif de préparation de produits alimentaires présentant les caractéristiques suivantes :
a. ce dispositif présente un réservoir (1) pouvant contenir les produits alimentaires,
b. le réservoir (1) communique par une ouverture de sortie (20) avec l'ouverture (4) d'une cuve de préparation (2), qui peut être fermée par un troisième système d'obturation (3),
c. l'ouverture de sortie (20) du réservoir (1) peut être fermée par un premier système d'obturation (8) qui peut être réglé en position d'ouverture et/ou fermeture en fonction d'une grandeur de réglage ou d'une certaine quantité de produits alimentaires,
d. la cuve de préparation (2) est reliée à une installation d'élévation de pression et à un dispositif d'alimentation (28) en eau ou en autre substance ou liquide,
e. la cuve de préparation (2) communique par au moins une ouverture (4) avec un récipient (7).

2. Dispositif selon la revendication 1, **caractérisé en ce que** le premier système d'obturation (8) prévu devant l'ouverture de la cuve de préparation (2) est conçu comme une installation de dosage et sert à portionner les produits alimentaires qui sont acheminés dans la cuve de préparation (2).

3. Dispositif selon la revendication 2, **caractérisé en ce que** le premier système d'obturation (8) prévu devant l'ouverture de la cuve de préparation (2) est conçu comme une balance, qui consiste en un clapet (6) pivotant sur un axe (9) et en un bras de levier (10) relié au clapet (6) qui est connecté à un dispositif d'entraînement (11).

4. Dispositif selon la revendication 1, **caractérisé en ce que** le dispositif d'entraînement (11) présente un disque excentrique (12), qui agit en liaison avec le bras de levier (10) par l'intermédiaire d'une pièce de jonction (13).

5. Dispositif selon une des revendications précédentes, **caractérisé en ce qu'**est adjoint au premier système d'obturation (8) le modulateur (14), qui, lorsque sont atteints une certaine quantité de remplissage de produits alimentaires et qu'il en résulte une grandeur de réglage correspondante, règle le clapet (6) en position d'ouverture et, après le versement des produits alimentaires, le règle en position de fermeture.

6. Dispositif selon la revendication 1, **caractérisé en ce que** le premier dispositif d'obturation (8) comporte un bras de levier (10), un poids (15) équivalant à la quantité de remplissage étant placé sur le bras de levier (10) du clapet (6).

7. Dispositif selon une des revendications précédentes, **caractérisé en ce que** le bras de levier (10) est relié à un élément de réglage souple (16) avec un interrupteur à deux positions (17), qui ne peut être activé que lorsque le clapet (6) a atteint sa position extrême ou de fermeture.

8. Dispositif selon une des revendications précédentes, **caractérisé en ce que** la pièce de jonction (13) prévue entre le dispositif d'entraînement (11) et le levier (10) est un élément à ressort de conception telle que, pour une quantité d'un certain poids, le clapet (6) peut être réglé en position d'ouverture.

9. Dispositif selon une des revendications précédentes, **caractérisé en ce que** la cuve de préparation (2) présente un troisième système d'obturation réglable (3) qui peut être mis en position de fermeture ou d'ouverture par l'action d'un moteur.

10. Dispositif selon une des revendications précédentes, **caractérisé en ce que** le troisième système d'obturation (3) de la cuve de préparation (2) fonctionne en liaison avec un deuxième système d'obturation (19), qui permet de fermer l'ouverture de sortie (20) de la cuve de préparation (2).

11. Dispositif selon une des revendications précédentes, **caractérisé en ce que** le deuxième système d'obturation (19) du réservoir (1) est reliée par l'intermédiaire d'une pièce de réglage (21) au troisième système d'obturation (3) de la cuve de préparation (2).

12. Dispositif selon une des revendications précédentes, **caractérisé en ce qu'**un moteur d'entraînement (22) est en liaison, par l'intermédiaire de la pièce de réglage (21), avec le troisième système d'obturation (3) et, par l'intermédiaire d'une connexion laissant du jeu ou du bras de réglage (21), obligatoirement avec le deuxième système d'obturation (19).

13. Dispositif selon une des revendications précédentes, **caractérisé en ce qu'**avant l'installation de dosage (8), est prévu un dispositif de transport (24) qui fonctionne en liaison avec un dispositif d'entraînement (23), qui achemine les produits alimentaires jusqu'à l'installation de dosage (8).

14. Dispositif selon une des revendications précédentes, **caractérisé en ce que** le réservoir (1) et l'installation de dosage (8) ainsi que le dispositif de transport (24) sont installés dans un compartiment isolé ou dans un compartiment réfrigérant (25).

15. Dispositif selon une des revendications précédentes, **caractérisé en ce que** le compartiment réfrigérant (25) peut être fermé à l'aide d'un système d'obturation isolé ou du deuxième système d'obturation (19).

16. Dispositif selon une des revendications précédentes, **caractérisé en ce qu'**entre l'installation de dosage (8) et le système d'obturation isolé ou le deuxième système d'obturation (19), un espace de réception (26) est prévu.

17. Dispositif selon une des revendications précédentes, **caractérisé en ce que** le troisième système d'obturation (3) de la cuve de préparation (2) est ouvert le premier et qu'ensuite le deuxième système d'obturation (19) du compartiment réfrigérant (25) et/ou de l'espace de réception (26) est ouvert, après un temps d'attente, en suivant la conduite obligatoire (21).

18. Dispositif selon une des revendications précédentes, **caractérisé en ce que** la cuve de préparation (2) peut être entraînée par un dispositif d'entraînement (27).

19. Dispositif selon une des revendications précédentes, **caractérisé en ce que** la cuve de préparation (2) peut être réchauffée par le chauffage en fonction de la marchandise ou des frites traitées.

20. Dispositif selon une des revendications précédentes, **caractérisé en ce que** le dispositif d'entraînement (27) est équipé d'un dispositif de commande pouvant influer sur le temps du cycle et/ou le régime d'entraînement de la cuve de préparation (2).

21. Dispositif selon une des revendications précédentes, **caractérisé en ce qu'**après la préparation des produits alimentaires au moyen de la cuve de préparation (2) l'ouverture (4) s'ouvre automatiquement et que le récipient (7) où se trouvent les produits alimentaires est vidé.

22. Dispositif de préparation de produits alimentaires, **caractérisé par** les points suivants :
a. le dispositif présente un support (29), sur lequel peuvent être empilées plusieurs récipients (7) ou réceptacles pouvant recevoir des produits alimentaires,
b. dans la zone du support (29) ou d'une ouverture de sortie (30) du support (29), au moins un élément de maintien (31) est prévu pour bloquer le récipient (7) dans le support.
c. dans la zone de l'ouverture de sortie (30) du support (29) est prévue une pièce de séparation (32) qui sépare au moins un récipient (7) des autres récipients (7) tenus dans le support (29), de telle manière que le récipient (7) peut être mis dans une position où il peut recevoir les marchandises ou produits alimentaires.

23. Dispositif selon la revendication 1 ou 22, **caractérisé en ce que** l'élément de maintien (31) et la pièce de séparation (32) sont placés sur un axe rotatif (33).

24. Dispositif selon la revendication 1 ou 22, **caractérisé en ce que** l'élément de maintien (31) et la pièce de séparation (32) sont actionnés ensemble par un dispositif d'entraînement (34).

25. Dispositif selon la revendication 1 ou 22, **caractérisé en ce que** l'élément de maintien (31) et la pièce de séparation (32) consistent en deux corps rotatifs (35, 36) reliés l'un à l'autre, qui peuvent être actionnés ensemble par le dispositif d'entraînement (34).

26. Dispositif selon la revendication 1 ou 22, **caractérisé en ce que** la pièce de séparation supérieure (32) des deux corps rotatifs (35, 36) est globalement de forme circulaire et qu'une partie de ce corps rotatif circulaire est découpée en segments dans le secteur de son volume extérieur.

27. Dispositif selon une des revendications précédentes, **caractérisé en ce que** le récipient (7) comporte un rebord (37) sous lequel l'élément de maintien (31) du corps rotatif supérieur (35) peut être positionné.

28. Dispositif selon une des revendications précédentes, **caractérisé en ce que** le rebord (37) est d'une largeur R₁, qui correspond approximativement à la largeur A₁ de la section segmentée (38 ou 39).

29. Dispositif selon une des revendications précédentes, **caractérisé en ce que** le récipient (7) comporte un rebord (37) sous lequel l'élément de maintien (31) du corps rotatif inférieur (36) peut être positionné.

30. Dispositif selon une des revendications précédentes, **caractérisé en ce que** l'élément de maintien (31) du corps rotatif supérieur (36) est décalé, par rapport à l'élément de maintien (31) du corps rotatif inférieur (36) d'un angle allant de 45° à 230° ou de 180°.

31. Dispositif selon les revendications 1 et 22,
**caractérisé par** les points suivants :
a. le dispositif présente, dans la zone de l'ouverture de sortie du support (29), pour le dépôt du récipient (7), une table réceptrice, un plateau pivotant (40) ou une table réceptrice avec des éléments de convoyage (81), sur laquelle les récipients (7) peuvent être déposés et placés l'un derrière l'autre sous l'ouverture de sortie ou la zone de sortie (41) de la cuve de préparation (2).
b. à la table réceptrice ou au plateau pivotant (40) est adjoint un support supplémentaire ou du moins un compartiment (71 ou 72) pour le dépôt des récipients (73) pouvant contenir des mélanges annexes ou des épices qui doivent être ajoutés dans le premier récipient (7).

32. Dispositif selon une des revendications précédentes, **caractérisé en ce que**, dans le support ou dans les compartiments (71, 72) pouvant recevoir les récipients (73), au moins un élément de séparation ou une pièce de brassage (44) est prévu, au moyen duquel les récipients (73) peuvent être séparés les uns des autres.

33. Procédé de préparation de produits alimentaires, présentant les étapes suivantes :
a. les produits alimentaires ou frites contenus dans le réservoir (1) sont acheminés par une ouverture de sortie au dispositif de dosage (8), qui convoie une certaine quantité de remplissage par l'ouverture de sortie (20) de la cuve de préparation (2) au deuxième système d'obturation (19), qui ne peut être mis en position de fermeture qu'une fois que le troisième système d'obturation (3) de la cuve de préparation (2) a été mis en position d'ouverture,
b. les produits alimentaires ou les frites sont traités afin de les rendre comestibles dans la cuve de préparation (2), qui est reliée à une installation d'élévation de pression et à une installation d'alimentation (28) en eau ou autre substance ou liquide,
c. après la préparation des produits alimentaires, ceux-ci sont versés dans un récipient (7),
d. le récipient (7) est séparé du récipient suivant (7) par un dispositif de séparation, est déposé sur une table réceptrice (40) et peut ensuite être enlevé par un opérateur après avoir été rempli,
e. il est possible d'acheminer vers le premier récipient (7), avant son enlèvement et grâce à un deuxième dispositif d'alimentation, un autre récipient (73) contenant des mélanges annexes ou épices.
